# EUROPEAN PATENT SPECIFICATION

(11) **EP 1 629 016 B1**
(45) Date of publication and mention of the grant of the patent: **03.09.2008**
(21) Application number: 04733833.0
(22) Date of filing: 19.05.2004
(51) Int. Cl.: C08B 31/04, C08B 37/00, C08B 3/14

(54) **A PROCESS FOR THE PREPARATION OF HYDROXY POLYMER ESTERS**
VERFAHREN ZUR HERSTELLUNG VON ESTERN HYDROXYLGRUPPENHALTIGER POLYMERE
PROCEDE DE PREPARATION D'ESTERS DE POLYMERE HYDROXY

(30) Priority: 21.05.2003 FI 20030769
(43) Date of publication of application: 01.03.2006
(73) Proprietor: Ciba Holding Inc., 4057 Basel (CH)
(72) Inventor: LAINE, Aki, FI-21200 Raisio (FI); KÄKI, Jouko, FI-20300 Turku (FI); LUTTIKHEDDE, Hendrik, Jan, Gerrit, FI-21260 Raisio (FI); NURMI, Kari, FI-21200 Raisio (FI); NYMAN, Tomi, FI-01390 Vantaa (FI); YLI-KAUHALUOMA, Jari, FI-00710 Helsinki (FI)
(74) Representative: Lalli, Esko
(86) International application number: PCT/FI2004/000301
(87) International publication number: WO 2004/104048

(56) References cited:
- WO-A-00/15669
- FR-A- 2 832 156
- US-A1- 2003 027 733

## Description

### Summary of the invention

This invention covers a novel method for the preparation of hydroxy polymer esters of amino, alkylamino and quaternary ammonium acids and their use in several fields of industry, including the use as additives in the manufacture of paper or paperboard. The esterification of the hydroxy polymer, preferably starch, is performed under semianhydrous conditions by heating homogenized mixtures of the hydroxy polymer and reagents.

### Background of the invention

Starch is a renewable and economical raw material and the third most used component by weight in paper industry. The main role of starch is to improve the strength of paper. Starch is also used as an adhesive in surface sizing and as a binder in coating formulations. The bonding of starch to cellulosic fiber is generally improved by addition of cationic substituents to the starch backbone. The positively charged cationic starch, containing amino or ammonium groups, has a strong affinity for negatively charged surfaces and particles i.e. cellulosic fibers and mineral pigments.

Cationic starches are also used in textile industry to improve the textile feel of the fabric. In waste water treatment, the use of cationic starches improves the retention of anionic impurities in the flocculation processes.

The use of low molecular weight cationic starches in cosmetics and the treatment of a keratin-containing substrate is disclosed in patent US 6365140. Another cosmetic treatment composition comprising cationic starch betainate has been described in patent publication WO 02/07684, which also covers a cosmetic treatment method for keratinous matter and use for washing skin.

Several methods have been developed for the cationization of starch. The cationization is generally carried out by etherification of starch with 2,3-epoxypropyl trimethylammonium chloride or 3-chloro-2-hydroxypropyl trimethylammonium chloride in an alkaline aqueous slurry or a dry process. The common cationization reagent can give undesirable reaction by-products.

The generally known methods of preparing carboxylic acid esters of starch involve the use of acid chlorides or anhydrides in organic solvents such as pyridine or 1,4-dioxane. Patent publication WO 00/15669 illustrates the esterification of starch using acid chloride of betaine in 1,4-dioxane and pyridine. Patent FR 2805270 concerns novel types of cationic polymers and polymeric matrices, degradable in the organism, and with controlled rate of degradation, useful as such or as vehicles for different compounds, in particular molecules with biological activity. FR 2805270 also describes a method for producing said polymers and matrices from maltodextrins and acid chlorides of betaines in pyridine and DMF.

Patent publication US 2003/0027733 A1 relates to preparation of partial ester of a nitrogenous carboxylic acid ester with cellulose by contacting a nitrogenous carboxylic acid ester with cellulose and heat-treating the mixture. There is no hint that carboxylic acid successfully may be used in the place of the carboxylic acid ester.

The use of undesired and relatively expensive solvents and reagents generate both environmental load and high price for starch esters and may leave traces of harmful substances in final products. Therefore, the general esterification methods do not fulfill the requirements for the high-volume and low-cost starch esters, especially when the application of the starch ester may be involved in food products, cosmetics or pharmaceuticals.

A method for the preparation of phosphate esters of starch by heating dry mixtures of starch and inorganic salts of phosphoric acid is generally known. The common manufacturing procedures are exemplified by patents US 2884412 and US 2865762. These procedures involve impregnating starch granules with alkali metal phosphates or other phosphate reagents in aqueous slurries, drying of the starch granules without gelatinizating them to a moisture content of less than 20%, and then heating of the dry granules to reaction temperatures of about 120 to 175 °C. A similar dry phosphorylation process is described in patent US 6365002, where amphoteric starch additives for papermaking are produced by phosphorylation of cationic starch. The amphoteric starch phosphates provide advantageous paper properties and improved wet end performance.

An analogous method for the preparation of highly crosslinked and water insoluble starch esters of citric acid has been published in Starch/Stärke 48 (1996) 275-279. In the esterification procedure, dry mixtures of starch and sodium salts of citric acid are heated at 110-140 °C for 2-24 h. The thus prepared water-insoluble starch citrates were used as biodegradable ion-exchangers for metals.

In the patent publication DE 4208946, water insoluble starch acetates containing amino acid esters are prepared for the manufacture of biodegradable plastics. However, the procedure involves the use of acid anhydrides, and produces amino acid esters in *N-*acylated form. The N-acylation of amino acids is usually an undesired reaction and reduces the functionality of amino acid esters of starch in applications where the presence of free amino groups is required.

The production of anthranilic acid ester of starch and its use as a paper retention aid has been described in the patents NL 6717509, US 3499886, US 3511830, US 3513156 and US 3620913. The esterification of starch is performed using isatoic anhydride in an organic solvent or an aqueous slurry. Isatoic anhydride (i.e. N-carboxy anhydride of anthranilic acid) is generally prepared from anthranilic acid and phosgene. The hydrolysis product shows biological activity.

A retention aid for chemical pulp prepared by derivatization of dialdehyde starch with betaine hydrazide has been described in Tappi 44, 1962, 750. However, the thus formed hydrazones of starch are harmful and their preparation is complex and unfeasible.

Patent US 2170272 describes the thinning of starch pastes for textile and paper sizing purposes by heating starch pastes in the presence of acid salts of amino acids, such as betaine hydrochloride. The thinning process is carried out for starch pastes containing over 90% of water at temperatures around 85 °C and therefore, no esterification of amino acids is involved. The purpose of amino acids in the patented process is to immobilize strong acids, which are responsible for the thinning (i.e. acid hydrolysis) of starch, so that dry blends of acid salts and starch can be safely stored prior to the thinning by cooking.

### Detailed description of the invention

This invention covers a novel method for preparation of amino, alkyl amino and quaternary ammonium acid esters of starch and other hydroxy polymers. Said esters can replace conventional products in several applications. The invented process does not include undesired substances, and for example the starch esters prepared according to the invention are more biodegradable than the traditional cationic starch ethers.

In this invention, a hydroxy polymer, preferably starch, and a natural or synthetic, amino, alkylamino or quaternary ammonium acid are esterified in a dry process in the presence of an acidulating agent without additional solvents. The acidulating agent, preferably an inorganic or organic acid, is essential for the esterification of the zwitterionic amino acid, since quite neutral inner salts of ammonium and amino acids do not form significant amount of esters when heated solely with dry hydroxy polymers.

The amino, alkylamino or quaternary ammonium acid, onwards termed as the amino acid, is preferably selected from the group consisting of betaine, propiobetaine, butyrobetaine, crotonobetaine, valerobetaine, 2-betainyllactate, carnitine, acetylcarnitine, dehydrocamitine, succinylmonocholine, glycine, alanine, serine, threonine, tyrosine, valine, phenylalanine, cysteine, proline and mixtures thereof. Betaine, carnitine and alanine are preferred.

The acidulating agent is preferably an inorganic or organic acid selected from the group consisting of HCl, H₂SO₄, NaHSO₄, H₃PO₄, HNO₃, acetic acid, propionic acid, butanoic acid, pivalic acid, lactic acid, glycolic acid, glyceric acid, acrylic acid, methacrylic acid, benzoic acid, salicylic acid, methanesulphonic acid, p-toluenesulphonic acid and mixtures thereof. Preferred acidulating agents are HCl, H₃PO₄, lactic acid, glycolic acid and glyceric acid.

The acidulating agent forms salts with amino, alkylamino or ammonium groups of amino acid, and thereby liberates acidic groups from inner salts of amino acid for esterification.

The esterification of the acidulating agent may also occur, especially when a carboxylic acid is applied. Likewise, the use of certain inorganic acids (such as phosphoric and sulphuric acid) as acidulating agents produces inorganic esters among amino acid esters, thus rendering amphoteric character for the hydroxy polymer esters. The esterification of the acidulating agent together with the amino acid is usually beneficial. For instance the additional substitution of starch by lactic acid or acetic acid stabilizes starch solutions against retrogradation, and the hydrophobicity of the starch esters may be altered by using hydrophobic acids as acidulating agents. A hydroxy acid such as lactic acid as acidulating agent may graft polyester branches on starch.

A preferred hydroxy polymer for the process is unmodified starch, although modified starches can be used as well. However, for example modified or unmodified cellulose, chitosan, guar gum, xanthan, polyvinyl alcohol and mixtures thereof are also applicable.

In a preferred esterification method according to this invention, hydroxy polymer is mixed with the amino acid and the acidulating agent, for example by using small amounts of water to impregnate hydroxy polymer with acids. The homogenized moist mixture is dried at a mild temperature. In the case of granular starch, the drying temperature is preferably below the gelatinization temperature of starch. Prior to the esterification, the moisture content of the reaction mixture is preferably less than 25% and even more preferably less than 5% of water. The esterification reaction is performed by heating the dry and homogeneous mixture of starch, amino acid and acidulating agent at 80-230 °C, preferably at 110 - 160 °C, e.g. for 1-50 h, preferably 3-25 h. The reaction time may vary from seconds to several days and is dependent on the type of the reactor, the reaction temperature and pressure and the choice of reagents. The reaction efficiency (RE) of the amino acid esterification is typically 10 - 50%. Depending on the application, the unreacted acidulating agent and unreacted amino acids may remain in the final product or the starch ester may be purified, e.g. by suspending it in water and precipitating with ethanol, acetone or other appropriate solvent.

Variable degrees of substitution (DS) may be achieved for the amino acid esters. The invented process is the most suitable for the production of amino acid esters having a DS < 0.1. In addition, the preparation of amino acid esters of starch having DS > 0.1 is feasible, especially when lower molecular weight hydroxy polymer esters are desired.

The invented esterification process may cause simultaneous degradation of hydroxy polymers. For instance, starch is partially hydrolyzed in the heating process and some acidulating agents, such as HCl, catalyze transglycolysation of the starch chain. In certain applications, where low viscosity and high concentation solutions are required, an adequate level of hydrolysis is preferred. The molecular weight of the final hydroxy polymer ester is strongly dependent on the reaction temperature and time, along with the choice of reagents and the moisture content of the reaction mixture during the heating phase. When higher molecular weight starch esters are desired, a simultaneous crosslinking may be performed by addition of multivalent carboxylic acids, such as citric acid, succinic acid, malonic acid or EDTA, or other crosslinkers, such as glyoxal or epichlorohydrin, into the reaction mixtures. This affords the products with a wide range of molecular weight.

In order to achieve a sufficiently high solids content of starch in the paper manufacture, the conventional cationic starches are usually thinned (i.e. acid hydrolyzed or oxidized) prior to the cationization, which adds an additional step and expenses to the process. In the invented process, a simultaneous thinning of starch occurs during the esterification process. Consequently, a separate thinning process of starch is not needed, and unmodified starches may be used as an expedient raw material. This does not however exclude the use of thinned or otherwise modified starch.

The invented process comprises solely of risk-free and economical raw materials, and the products are fully biodegradable. The esterification process can be feasibly performed using various apparatuses, such as ovens, dryers, microwave reactors, kneaders, fluidisized beds, extruders, etc., which allow an easy and economical scale up of the ester production. The invented starch esters are suitable for paper manufacture, e.g. as the wet end additives and in the paper sizing applications. Due to biodegradability, physiologically acceptable properties, and the avoidance of undesired raw materials, the amino acid esters of starch are applicable especially as additives of food, paper or paperboad, in effluent treatment, cosmetics and pharmaceutics.

The described embodiments should not be construed as restrictive. For example although starch is preferred material for the process, also some other hydroxy polymer, such as cellulose, chitosan, guar gum, xanthan or polyvinyl alcohol, could be used, and starch or other hydroxy polymer might also be modified, e.g. thinned.

### EXAMPLES

### Example 1. Esterification of starch with betaine hydrochloride.

Betaine hydrochloride (9.96 g; 0.3 mol. equiv.) was dissolved in 150 g of water and mixed with potato starch (35 g; 1.0 mol. equiv.). Water was evaporated, and the mixture was heated in vacuum oven at 140 °C for 16 h. The first intermediate product was homogenized in 150 ml of water, evaporated to dryness and heated in vacuum oven at 140 °C for 16 h. The second intermediate was again homogenized in 150 ml of water, evaporated to dryness and heated in vacuum oven at 140 °C for 24 h. The raw product was purified by dissolving it in water and precipitating with ethanol. The dried starch ester had the betainate DS of 0.16 (RE 53%), and the average molecular weight of 300000 g/mol.

### Example 2. Esterification of starch with betaine and sulphuric acid.

Inner salt of betaine (12.66 g; 0.35 mol equiv.) and sulphuric acid (9.08 g; 0.30 mol equiv.) were dissolved in 100 ml of water. The solution was mixed with dry native potato starch (50.0 g; 1.0 mol equiv.). Water was evaporated below 45 °C. The dry mixture was heated in an ageing oven at 130 °C for 161 h. The raw product was purified three times by slurrying it in water, and precipitating with ethanol. The dried starch ester had the betainate DS of 0.12 (RE 34%), and the average molecular weight of 60000 g/mol.

### Example 3. Esterification of starch with betaine and phosphoric acid.

Inner salt of betaine (1012 g; 0.14 mol equiv.) and phosphoric acid (786 g; 0.13 mol equiv.) were dissolved in 41 of water. The solution was mixed with dry native potato starch (10.0 kg; 1.0 mol equiv.) in the Lödige VT50 contact dryer. 41 of water was added to the mixture and the moist slurry was dried at 100 mbar at 45 °C. When the water content of 1% was reached, the mixture was heated under reduced pressure at 125 °C for 14 h. The raw product was purified twice by slurrying in 101 of water, precipitating with 151 of ethanol and filtering. The dried pale yellow starch ester had the betainate DS of 0.03 (RE 21 %) and the average molecular weight of 34000 g/mol.

### Example 4. Esterification of starch with betaine and acetic acid.

Inner salt of betaine (2.89 g; 0.20 mol equiv.) and acetic acid (2.97 g; 0.40 mol equiv.) were dissolved in 30 ml of water. The solution was mixed with dry native potato starch (20.0 g; 1.0 mol equiv.). Water was evaporated at 45 °C. The mixture was heated in an ageing oven at 160 °C for 2 h. Acetic acid (20 ml) was added and the mixture was heated at 160 °C for another 2 h. The raw product was purified twice by slurrying it in 100 ml of water, precipitating with 200 ml of ethanol. The dried starch ester had the betainate DS of 0.01 (RE 5%) and the acetate DS of 0.10.

### Example 5. Esterification of starch with betaine and DL-lactic acid.

Inner salt of betaine (1085 g; 0.15 mol equiv.) and DL-lactic acid (1112 g; 0.20 mol equiv.) were dissolved in 41 of water. The solution was mixed with dry native potato starch (10.0 kg; 1.0 mol equiv.) in the Lödige VT50 contact dryer. 3.51 of water was added to the mixture, and the moist slurry was dried at 100 mbar at 45 °C. When the water content of 5% was reached, the mixture was heated at 125 °C for 19 h. The raw product was purified twice by slurrying it in 101 of water, precipitating with 15 1 of ethanol and filtering. The dried starch ester had the betainate DS of 0.02 (RE 13%), the lactate DS of 0.08 (RE 40%).

### Example 6. Esterification of starch with (±)-carnitine hydrochloride

(±)-Carnitine hydrochloride (24.40 g; 0.20 mol equiv.) was dissolved in 120 ml of water. The solution mixed to potato starch (100.0 g; 1.00 mol equiv.). Water was evaporated at 45 °C to the moisture content of 2%. The mixture was heated and occasionally agitated in an ageing oven at 140 °C for 4 h. The raw product was purified twice by slurrying it in 300 ml of water, precipitating with 600 ml of ethanol and filtering. The dried starch ester had the carnitate DS of 0.03 (RE 15%), and the average molecular weight of 18000 g/mol.

### Example 7. Esterification of starch with propiobetaine hydrobromide.

Propiobetaine hydrobromide (1.67 g; 0.20 mol equiv.) was dissolved in 15 ml of water. The solution was mixed to potato starch (5.00 g; 1.00 mol equiv.). Water was evaporated at 45 °C. The mixture was heated in an ageing oven at 140 °C for 21 h. The raw product was purified three times by slurrying it in 300 ml of water, precipitating with 600 ml of ethanol and filtering. The dried starch ester had the propiobetaine DS of 0.04 (RE 20%).

### Example 8. Esterification of starch with L-alanine and phosphoric acid.

L-alanine (825 g; 0.18 mol equiv.) and phosphoric acid (903 g; 0.165 mol equiv.) was dissolved in 21 of water. The solution was mixed with dry native potato starch (9.0 kg; 1.0 mol equiv.) in the Lödige VT50 contact dryer. 6.5 of water was added to the mixture and the moist slurry was dried at 100 mbar at 45 °C. When the water content of 3% was reached, the mixture was heated under reduced pressure at 125 °C for 1 h 15 min. The raw product was purified twice by slurrying it in 121 of water, precipitating with 181 of ethanol and filtering. The dried starch ester had the L-alaninate DS of 0.03 (RE 17%) and the average molecular weight of 90000 g/mol.

### Example 9. Esterification of starch with DL-alanine and DL-lactic acid.

DL-alanine (825 g; 0.15 mol equiv.) and DL-lactic acid (1112 g; 0.20 mol equiv.) were dissolved in 41 of water. The solution was mixed with dry native potato starch (10.0 kg; 1.0 mol eq.) in the Lödige VT50 contact dryer. 3.51 of water was added to the mixture and the moist slurry was dried at 100 mbar at 45 °C. When the water content of 5% was reached the mixture was heated at 125 °C for 4.5 h. The raw product was purified twice by slurrying it in 101 of water, precipitating with 151 of ethanol and filtrating. The dried starch ester had the DL-alaninate DS of 0.02 (RE 13%) and the lactate DS of 0.04 (RE 20%).

### Example 10. Esterification of starch with glycine and DL-lactic acid.

Glycine (3.48 g; 0.15 mol equiv.) and lactic acid (5.56 g; 0.20 mol equiv.) was dissolved in 60 ml of water. The solution was mixed with dry native potato starch (50.0 g; 1.0 mol equiv.). Water was evaporated below 45 °C. When the water content of 3% was reached, the mixture was heated in the Brabender kneader at 125 °C for 4 h. The raw product was purified twice by slurrying in 20 ml of water, precipitating with 30 ml of ethanol. The dried starch ester had the glycinate DS of 0.01 (RE 7%) and the lactate DS of 0.06 (RE 30%).

### Example 11. Esterification of starch with L-proline and phosphoric acid.

L-proline (2.49 g; 0.35 mol equiv.) and sulphuric acid (2.12 g; 0.35 mol equiv.) were dissolved in 25 ml of water. The solution was mixed with dry native potato starch (10.0 g; 1.0 mol equiv.). Water was evaporated below 45 °C. When the water content of 3% was reached, the mixture was heated in an ageing oven at 110 °C for 3 h. The raw product was purified by slurrying in water, precipitating with ethanol. The dried starch ester had the L-prolinate DS of 0.08 (RE 23%) and the average molecular weight of 470000 g/mol.

### Example 12. Esterification of guar gum with betaine and DL-lactic acid.

Betaine (0.72 g; 0.2 mol equiv.) and DL-lactic acid (0.83 g; 0.3 mol equiv.) was dissolved in 60 ml of water. The solution was mixed with guar gum (5.0 g; 1.0 mol equiv.) and the mixture was dried in a rotavapor. When the water content of 25% was reached, the mixture was heated in an ageing oven at 160 °C for 18 h. The raw product was purified by slurrying in 20 ml of water, precipitating with 30 ml of ethanol. The dried guar gum ester had the betainate DS of 0.02 (RE 10%) and the lactate DS of 0.25 (RE 83%).

### Example 13. Esterification of starch with 2-betainyllactate, pivalic acid and DL-lactic acid.

2-betainyllactate (1.64 g; 0.14 mol equiv.), pivalic acid (0.88 g; 0.14 mol equiv.) and DL-lactic acid (2.56 g; 0,46 mol equiv.) were dissolved in 20 ml of water. The solution was mixed with dry native potato starch (10.0 g; 1.0 mol eq.) Water was evaporated at 45 °C. The mixture was heated in an ageing oven at 140 °C for 5.5 h. The raw poduct was purified twice by slurrying it in 25 ml of water, precipitating with 50 ml of acetone. The dried starch ester had the 2-betainyllactate DS of 0.08 (RE 50%) and the lactate DS of 0.20 (RE 43%). No pivalate esters were detectable.

### Example 14. Esterification of hydroxypropylcellulose with carnitine and DL-lactic acid

Carnitine hydrochloride (0.78 g; 0.35 mol equiv.) was dissolved in 20 ml of water and neutralized with NaHCO₃ (0.33 g; 0.35 mol equiv.) The solution was acidulated with DL-lactic acid (0.47 g; 0.47 mol equiv.) and mixed with hydroxypropyl cellulose (5.0 g; 1.0 mol equiv.; molecular hydroxypropyl substitution 4.9; MW 100 000). The mixture was dried in a rotavapor. When the water content of 5% was reached, the mixture was heated in an ageing oven at 140 °C for 5.5 h. The raw product had the carnitate DS of 0.06 (RE 16%) and the lactate DS of 0.27 (RE 57%).

### Example 15. Retention of starch betainate lactate and starch alaninate lactate on cellulose fibers.

The adsorption tendency of starch betainate on fiber material was examined by DDJ (Dynamic Drainage Jar). DDJ test was done according to Tappi standard T261 cm-90.

Starches in the test:
1. Starch betainate lactate. DS_{betainate}: 0.019; DS_{lactate}: 0.083; Viscosity (10% solution, cooked in microwave oven 8 min): 20 mPas
2. Starch alaninate lactate. DSₐₗₐₙᵢₙₐₜₑ: 0.019; DS_{lactate}: 0.04
3. Hypochlorite oxidised starch. DS_{COO-}: 0.035; Viscosity (10% solution, cooked in microwave oven 8 min): 20 mPas
4. Cationised and hypochlorite oxidised starch. DS_{cat}: 0.018; Viscosity (10% solution, cooked in microwave oven 8 min): 20 mPas

Furnish in the test:
Birch cellulose: 60%
Pine cellulose: 40%
Concistency: 2.05%
pH: 6.2
Schopper & Riegler value: 18

### Procedure:

All starches were cooked in microwave oven in concentration of 3% for 8 min. Starches were then diluted with deionised water into concentration of 1%. Starches were dosed into the furnish, agitated for 2 min and diluted with tap water into concistency of 0.6%. Each test sample was tested with DDJ-apparatus (100 rpm) and the filtrates were collected and analysed. Starch concentration, and cationic demand was determined from the filtrates.

| Starch | Dosage | CD | Conc. of starch in water | Starch retention |
|---|---|---|---|---|
| | (kg/ton) | µmol/l | (mg/l) | (%) |
| Reference | 0 | -26 | 0.0 | - |
| 1. Betainate | 10 | -28 | 24.6 | 59 |
| | 20 | -27 | 60.8 | 49 |
| 2. Alaninate | 10 | -28 | 37.0 | 38 |
| | 20 | -33 | 43.3 | 64 |
| 3. Oxidised | 10 | -63 | 51.8 | 14 |
| | 20 | -80 | 119.6 | 0.3 |
| 4. Cationised | 10 | -21 | 23.5 | 61 |
| | 20 | -20 | 66.7 | 44 |

The results of starch concentration in the filtrates and starch retention level show clearly that adsorption of starch betainate and starch alaninate into fibres is similar compared to adsorption of conventional cationic starch. Adsorption of oxidised starch (anionic) is clearly poorer. The adsorption tendency can been also seen in the cationic demand values. Starch betainate and conventional cationic starch does not impact very much on cationic demand value compared to impact of oxidised starch, which decreases the value remarkably.

## Claims

1. A process for the preparation of a hydroxy polymer ester containing amino, alkylamino or quaternary ammonium groups, **characterized in that** a solventless reaction mixture, which comprises a hydroxy polymer, an amino, alkylamino or quaternary ammonium acid and an acidulating agent and contains less than 25% water, is heated at a temperature of 80 °C or more.

2. The process according to claim 1, **characterized in that** the reaction is carried out at a temperature of 80 to 230 °C, advantageously at a temperature of 110 to 160 °C.

3. The process according to claim 1 or 2, **characterized in that** prior to the esterification the reaction mixture contains less than 5% of water.

4. The process according to any one of claims 1 to 3, **characterized in that** the reaction time is 1-50 h.

5. The process according to any one of claims 1 - 4, **characterized in that** the amino, alkylamino or quaternary ammonium acid contains at least one carboxylic acid group and at least one primary, secondary or tertiary amino or quaternary ammonium group.

6. The process according to any one of claims 1 - 5, **characterized in that** the acidulating agent is an inorganic or organic acid selected from the group consisting of HCl, H₂SO₄, NaHSO₄, H₃PO₄, HNO₃, acetic acid, propionic acid, butanoic acid, pivalic acid, lactic acid, glycolic acid, glyceric acid, acrylic acid, methacrylic acid, benzoic acid, salicylic acid, methanesulphonic acid, p-toluenesulphonic acid and mixtures thereof.

7. The process according to any one of claims 1 - 6, **characterized in that** the amino, alkylamino or quaternary ammonium acid acid is selected from the group consisting of betaine, propiobetaine, butyrobetaine, crotonobetaine, valerobetaine, 2-betainyllactate, carnitine, acetylcarnitine, dehydrocarnitine, succinylmonocholine, glycine, alanine, serine, threonine, tyrosine, valine, phenylalanine, cysteine, proline, and mixtures thereof.

8. The process of according to any one of claims 1 - 7, **characterized in that** the molecular weight of the hydroxy polymer ester is increased by the addition of a crosslinking reagent, such as citric acid, succinic acid, malonic acid or other multivalent carboxylic acid or glyoxal, to the reaction mixture.

9. The process according to any one of claims 1 - 8, **characterized in that** the hydroxy polymer is selected from the group consisting of unmodified or modified starch, cellulose, chitosan, guar gum, xanthan, polyvinyl alcohol and mixtures thereof, preferably unmodified starch.

## Patentansprüche

1. Verfahren zur Herstellung eines Hydroxypolymeresters, enthaltend Amino-, Alkylamino- oder quartäre Ammoniumgruppen, **dadurch gekennzeichnet, daß** ein lösungsmittelfreies Reaktionsgemisch, das ein Hydroxypolymer, eine Amino-, Alkylamino- oder quartäre Ammoniumsäure und ein Ansäuerungsmittel umfaßt und weniger als 25 % Wasser enthält, auf eine Temperatur von 80 °C oder mehr erhitzt wird.

2. Verfahren nach Anspruch 1, **dadurch gekennzeichnet, daß** die Reaktion bei einer Temperatur von 80 bis 230 °C, vorteilhaft bei einer Temperatur von 110 bis 160 °C, durchgeführt wird.

3. Verfahren nach Anspruch 1 oder 2, **dadurch gekennzeichnet, daß** das Reaktionsgemisch vor der Veresterung weniger als 5 % Wasser enthält.

4. Verfahren nach einem der Ansprüche 1 bis 3, **dadurch gekennzeichnet, daß** die Reaktionszeit 1 - 50 h beträgt.

5. Verfahren nach einem der Ansprüche 1 - 4, **dadurch gekennzeichnet, daß** die Amino-, Alkylamino- oder quartäre Ammoniumsäure mindestens eine Carbonsäuregruppe und mindestens eine primäre, sekundäre oder tertiäre Amino- oder quartäre Ammoniumgruppe enthält.

6. Verfahren nach einem der Ansprüche 1 - 5, **dadurch gekennzeichnet, daß** das Ansäuerungsmittel eine anorganisch oder organische Säure ist, ausgewählt aus der Gruppe, bestehend aus HCl, H₂SO₄ NaHSO₄, H₃PO₄, HNO₃, Essigsäure, Propionsäure, Butansäure, Pivalinsäure, Milchsäure, Glycolsäure, Glycersäure, Acrylsäure, Methacrylsäure, Benzoesäure, Salicylsäure, Methansulfonsäure, p-Toluolsulfonsäure und Gemischen davon.

7. Verfahren nach einem der Ansprüche 1 - 6, **dadurch gekennzeichnet, daß** die Amino-, Alkylamino- oder quartäre Ammoniumsäure aus der Gruppe, bestehend aus Betain, Propiobetain, Butyrobetain, Crotonobetain, Valerobetain, 2-Betainyllactat, Carnitin, Acetylcamitin, Dehydrocarnitin, Succinylmonocholin, Glycin, Alanin, Serin, Threonin, Tyrosin, Valin, Phenylalanin, Cystein, Prolin und Gemischen davon, ausgewählt wird.

8. Verfahren nach einem der Ansprüche 1 - 7, **dadurch gekennzeichnet, daß** das Molekulargewicht des Hydroxypolymeresters durch Zugabe eines Vernetzungsreagens wie Zitronensäure, Bernsteinsäure, Malonsäure oder einer anderen mehrwertigen Carbonsäure oder Glyoxal zu dem Reaktionsgemisch erhöht wird.

9. Verfahren nach einem der Ansprüche 1 - 8, **dadurch gekennzeichnet, daß** das Hydroxypolymer aus der Gruppe, bestehend aus unmodifizierter oder modifizierter Stärke, Cellulose, Chitosan, Guargummi, Xanthan, Polyvinylalkohol und Gemischen davon, bevorzugt unmodifizierter Stärke, ausgewählt wird.

## Revendications

1. Un procédé pour la préparation d'un ester de polymère comprenant des groupes hydroxy contenant des groupes amino, alkylamino ou ammonium quaternaire, **caractérisé en ce qu'**un mélange réactionnel sans solvant, qui comprend un polymère hydroxy, un acide aminé, un acide aminé alkylé ou un acide d'ammonium quaternaire et un agent acidulant et qui contient moins de 25% d'eau, est chauffé à la température de 80°C ou plus.

2. Le procédé selon la revendication 1, **caractérisé en ce que** la réaction est réalisée à une température de 80 à 230°C, avantageusement à une température de 110 à 160°C.

3. Le procédé selon la revendication 1 ou 2, **caractérisé en ce que**, avant estérification, le mélange réactionnel contient moins de 5% d'eau.

4. Le procédé selon l'une quelconque des revendications 1 à 3, **caractérisé en ce que** le temps de réaction est de 1 à 50 h.

5. Le procédé selon l'une quelconque des revendications 1 à 4, **caractérisé en ce que** l'acide aminé, l'acide aminé alkylé ou l'acide d'ammonium quaternaire contient au moins un groupe acide carboxylique et au moins un groupe ammonium quaternaire ou amino primaire, secondaire ou tertiaire.

6. Le procédé selon l'une quelconque des revendications 1 à 5, **caractérisé en ce que** l'agent acidulant est un acide inorganique ou organique choisi dans le groupe constitué par HCl, H₂SO₄, NaHSO₄, H₃PO₄, HNO₃, l'acide acétique, l'acide propionique, l'acide butanoïque, l'acide pivalique, l'acide lactique, l'acide glycolique, l'acide glycérique, l'acide acrylique, l'acide méthacrylique, l'acide benzoïque, l'acide salicylique, l'acide méthanesulfonique, l'acide p-toluènesulfonique et des mélanges de ceux-ci.

7. Le procédé selon l'une quelconque des revendications 1 à 6, **caractérisé en ce que** l'acide aminé, l'acide aminé alkylé ou l'acide d'ammonium quaternaire est choisi dans le groupe constitué par la bétaïne, la propiobétaïne, la butyrobétaïne, la crotonobétaïne, la valérobétaïne, le 2-bétaïnyllactate, la carnitine, l'acétylcarnitine, la déshydrocarnitine, la succinylmonocholine, la glycine, l'alanine, la sérine, la thréonine, la tyrosine, la valine, la phénylalanine, la cystéine, la proline et des mélanges de celles-ci.

8. Le procédé selon l'une quelconque des revendications 1 à 7, **caractérisé en ce que** la masse moléculaire de l'ester de polymère comprenant des groupes hydroxy est augmentée en ajoutant au mélange réactionnel un réactif de réticulation comme l'acide citrique, l'acide succinique, l'acide malonique ou un autre acide carboxylique multivalent ou le glyoxal.

9. Le procédé selon l'une quelconque des revendications 1 à 8, **caractérisé en ce que** le polymère comprenant des groupes hydroxy est choisi dans le groupe constitué par l'amidon non modifié ou modifié, la cellulose, le chitosane, la gomme de guar, le xanthane, l'alcool polyvinylique et des mélanges de ceux-ci, de préférence l'amidon non modifié.
